# EUROPÄISCHE PATENTSCHRIFT

(11) **EP 1 001 509 B1**
(45) Veröffentlichungstag und Bekanntmachung des Hinweises auf die Patenterteilung: **12.05.2004**
(21) Anmeldenummer: 99121946.0
(22) Anmeldetag: 09.11.1999
(51) Int. Cl.: H02K 11/02

(54) **Entstörter Kommutatormotor, insbesondere drehzahlstellbarer Kraftfahrzeug-Servomotor**
Radioshielded commutator motor, in particular speed regulated servo motor for motor vehicles
Moteur à commutateur antiparasité, notamment servomoteur avec réglage de vitesse pour véhicules à moteur

(30) Priorität: 12.11.1998 DE 19852251
(43) Veröffentlichungstag der Anmeldung: 17.05.2000
(73) Patentinhaber: SIEMENS AKTIENGESELLSCHAFT, 80333 München (DE)
(72) Erfinder: Bellmann, Jürgen, 97956 Werbach-Brunntal (DE); Zick, Stefan, Dipl.-Ing.(FH), 97332 Volkach (DE); Johanning, Hans-Peter, Dipl.-Ing., 97299 Zell am Main (DE)

(56) Entgegenhaltungen:
- EP-A- 0 489 940
- DE-A- 2 853 905
- GB-A- 2 140 218
- US-A- 5 444 315
- PATENT ABSTRACTS OF JAPAN vol. 010, no. 150 (E-408), 31. Mai 1986 (1986-05-31) -& JP 61 010943 A (MATSUSHITA DENKO KK), 18. Januar 1986 (1986-01-18)

## Beschreibung

Entstörter Kommutatormotor, insbesondere drehzahlstellbarer Kraftfahrzeug-Servomotor

Die Erfindung bezieht sich auf einen entstörten Kommutatormotor, insbesondere drehzahlstellbaren Kraftfahrzeug-Servomotor; eine bevorzugte Anwendung ist für eine elektrohydraulische Kraftfahrzeug-Servolenkung vorgesehen.

Insbesondere beim Einsatz in Kraftfahrzeugen sind derartige Kommutatormotore strengen Entstörvorschriften unterworfen; die dazu notwendigen Entstördrosseln sind üblicherweise auf einer Bürstentragplatte, auf der die den Kommutator beschleifenden Bürsten aufgenommen sind, gehaltert und über gesonderte Zuleitungen mit Stromversorgungs- bzw. Stellmitteln, insbesondere Drehzahlstellmitteln, verbunden.

Durch die EP 0 489 940 B1 ist es bekannt, diese Stromversorgungs- bzw. Stellmittel auf einer zu der Bürstentragplatte axial beabstandeten Leiterplatte innerhalb des Motorgehäuses anzuordnen und untereinander über ein in die Leiterplatte eingespritztes Stanzgitter zu kontaktieren. Die Büstenanschlüsse sind mit einem in die Bürstentragplatte eingegossenen Stanzgitter verbunden. Beide Stanzgitter sind mit Kontaktbeinen einer gegenseitigen Kontaktverbindung kontaktierbar, die von einem Isolierkörper-Wandteil aufgenommen ist.

Durch die GB 2 044 552 A ist ein Kleinmotor mit auf einer Bürstentragplatte axial vorstehend gehaltenen Bauteilen eines Thermoschalters und von Entstördrosseln bekannt, wobei von den beiden Anschlußbeinen an dem der Bürstentragplatte abgewandten Stirnende des Thermoschalters das eine mit einer Entstördrossel und das andere mit einer von der Bürstentragplatte gehaltenen Bürste verbunden ist.

Durch die DE 2 853 905 ist ein Kleinmotor mit axial zum Bürstenträger gehaltenen und mit den Stromanschlüssen verbundenen Entstördrosseln bekannt.

Gemäß Aufgabe vorliegender Erfindung soll mit für eine Serien-Produktion vorteilhaftem geringen Fertigungs- und Montageaufwand ein entstörter Kommutatormotor kompakter Bauart mit einer zu dessen Bürstenebene axial beabstandeten und zu kontaktierenden Platinenebene geschaffen werden.

Die Lösung dieser Aufgabe gelingt erfindungsgemäß durch einen Kommutatormotor gemäß Patentanspruch 1; vorteilhafte Ausgestaltungen sind Gegenstand der Unteransprüche.

Bei dem erfindungsgemäßen Kommutatormotor erübrigen sich der Material- bzw. Montageaufwand zur Erstellung gesonderter diskreter elektrischer Kontaktverbindungen zwischen der ersten Ebene und der zweiten Ebene, wobei die Entstördrosseln mit kurzen Leitungswegen an die Bürsten auf der ersten Ebene und an die Leistungsbauteile in der zweiten Ebene anschließbar und zumindest über einen wesentlichen Teil ihrer Bauhöhe in dem an sich vorhandenen Zwischenraum zwischen den beiden Ebenen unterbringbar sind.

Im Sinne einer vorteilhaften axialen Aufbaumontage, vorzugsweise im Sinne einer Vormontageeinheit, sind die Entstördrosseln durch eine mechanische axiale Steckfixierung mit ihren den Bürsten abgewandten Enden in korrespondierenden Halterungen der zweiten Ebene fixierbar und mit ihren Anschlußenden mit der Leiterplatte der zweiten Ebene kontaktierbar.

Nach einer Ausgestaltung der Erfindung sind sowohl die Bürstentragplatte der ersten Ebene als auch die Leiterplatte der zweiten Ebene in einem Lagerschild angeordnet, das vorzugsweise als mit den beiden Ebenen vormontierbare Baueinheit an der einen Stirnseite eines, insbesondere topfförmigen, Motorgehäuses, anbaubar ist.

Die Erfindung sowie weitere vorteilhafte Ausgestaltungen der Erfindung gemäß Merkmalen der Unteransprüche werden im folgenden anhand eines schematisch dargestellten Ausführungsbeispiels näher erläutert; darin zeigen:
- FIG 1: im Axialschnitt einen Kommutatormotor mit einem topfförmigen Gehäuse, an dessen linke offene Stirnseite ein sowohl die Bürstentragplatte als auch die Leiterplatte aufnehmender Lagerschild befestigt ist;
- FIG 2: in perspektivischer Darstellung den mit der Bürstentragplatte und der Leiterplatte bestückten Lagerschild gemäß FIG 1;

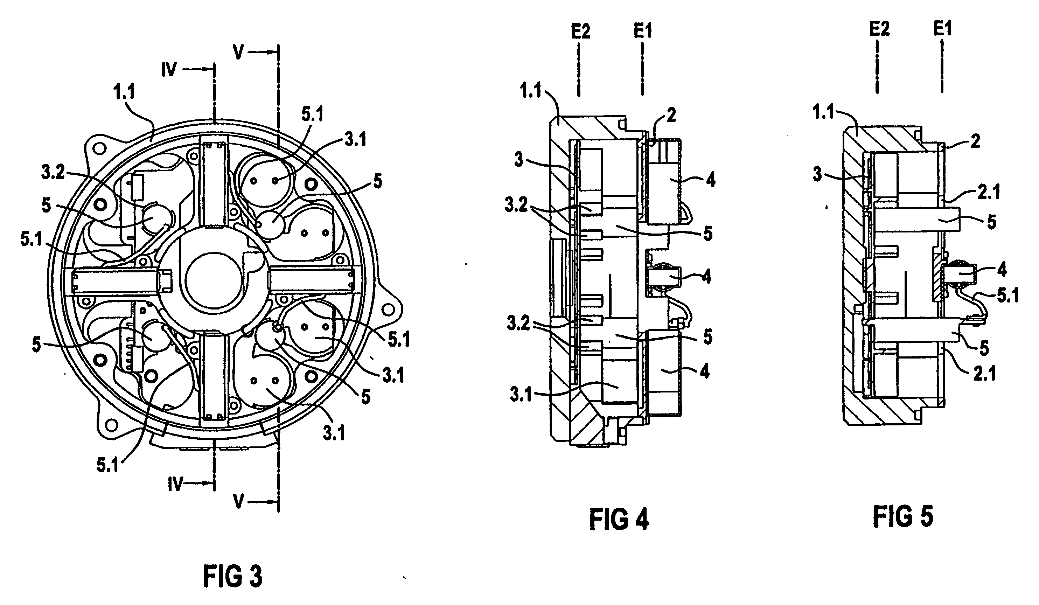

- FIG 3: eine axial motorinnere Draufsicht auf den mit der Bürstentragplatte und der Leiterplatte bestückten Lagerschild gemäß FIG 1,2;
- FIG 4: den Lagerschild gemäß FIG 3 im Schnittverlauf IV-IV;
- FIG 5: den Lagerschild gemäß FIG 3 im Schnittverlauf V-V.

Das erfindungsgemäße Ausführungsbeispiel geht aus von einem permanenterregten Kommutatormotor mit einem topfförmigen Motorgehäuse 1, an dessen Topfrandseite ein Lagerschild 1.1 befestigt ist. Eine Rotorwelle 1.2 ist innerhalb des Motorgehäuses 1 in je einem Lager im Topfboden des topfförmigen Motorgehäuses 1 als auch im Lagerschild 1.1 drehbar gelagert und ragt mit einem Abtriebswellenende aus dem Lagerschild 1.1 heraus. Auf der Rotorwelle 1.2 ist ein Rotorblechpaket 1.3 mit einer eingewickelten Wicklung und ein an diese Wicklung angeschlossener Kommutator 1.4 gehalten. Der Kommutator 1.4 wird von vier über seinen Umfang verteilten Bürsten 4 beschliffen, die in Bürstenkästen 4.1 geführt gehalten und gegen die Lamellenfläche des Kommutators 1.4 angedrückt sind. Die Bürstenkästen 4.1 sind auf einer Bürstentragplatte 2 befestigt, die an der motorinneren Stirn-Randseite des wie das Motorgehäuses 1 leicht topfförmig ausgebildeten Lagerschildes 1.1 fixiert ist. An der gehäuseinneren Topfbodenseite des Lagerschildes 1.1 ist in axialem Abstand zu der Bürstentragplatte 2 eine Leiterplatte 3 mit - in hier nicht näher dargestellter Weise - in eine Isolierstoffplatte eingegossenen Strombahnen in Form eines an sich bekannten Stanzgitters gehalten. Auf der Leiterplatte 3 können elektronische Leistungsbauelemente z.B. zur Drehzahlsteuerung bzw. Drehzahlregelung bzw. Stromregelung bzw. Strombegrenzung des Kommutatormotors angeordnet sein.

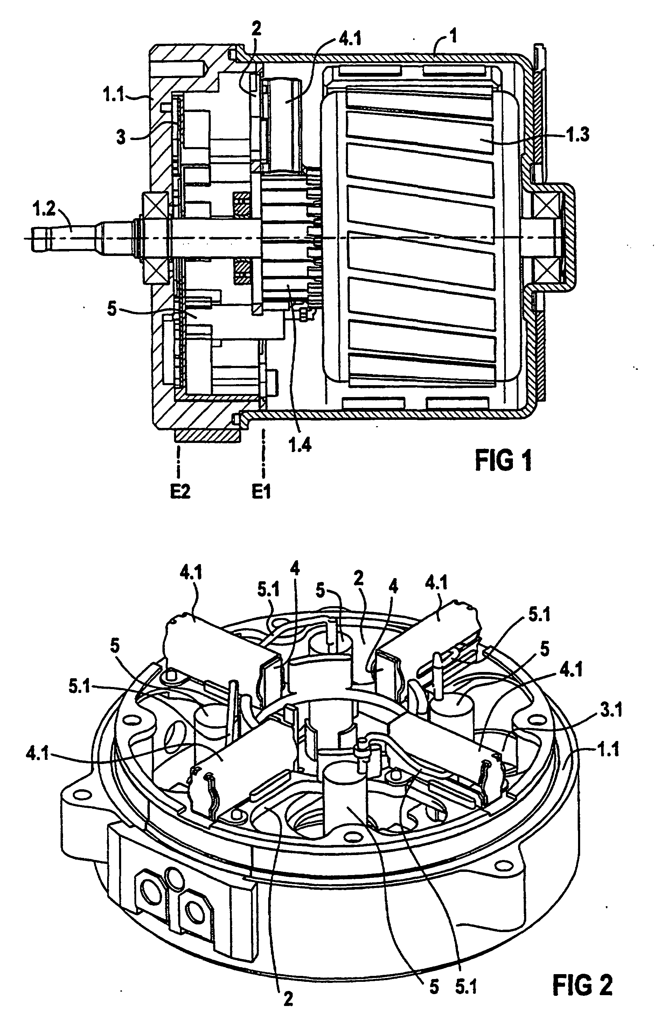

Zur Entstörung, insbesondere Funkentstörung, des Kommutatormotors ist jeder Bürste 4 je eine Entstördrossel 5 zugeordnet. Die Entstördrosseln 5 sind - wie insbesondere aus FIG 2 bzw. FIG 5 ersichtlich - axial im Zwischenraum zwischen der Bürstentragplatte 2 einerseits und der Leiterplatte 3 andererseits angeordnet und vorzugsweise in axialer Aufbau-Stecktechnik in vorteilhaft einstückig an den Isolierstoffteil der Leiterplatte 3 angespritzte Halterungen 3.2 einsteckbar und mit den Strombahnen des Stanzgitters der Leiterplatte 3 kontaktiert sind. In ähnlicher Weise sind auch Halterungen 3.1 für hier - zur deutlicheren Darstellung des Erfindungswesentlichen - noch nicht eingesteckte und kontaktierte Kondensatoren vorgesehen. In vorteilhafter Weise ist die bestückte Leiterplatte 3 mit u.a. den eingesteckten und kontaktierten Entstördrosseln 5 als vormontierbare Baueinheit auf dem Topfboden des Lagerschildes 1.1 fixierbar.

Die der Leiterplatte 3 abgewandten freien Enden der Entstördrosseln 5 ragen durch Öffnungen 2.1 der Bürstentragplatte 2 heraus und sind mit ihren bürstenseitigen Anschlußenden 5.1 unmittelbar an die Bürsten 4 angeschlossen, insbesondere angecrimpt, angelötet oder angeschweißt.

Die im wesentlichen im Abstandszwischenraum zwischen der Bürstentragplatte 2 und der Leiterplatte 3 angeordneten Entstördrosseln 5 dienen als direkte Kontaktverbindungen zwischen der Leiterplatte 3 einerseits und den auf der Bürstentragplatte 2 geführt gehaltenen Bürsten 4 andererseits, derart daß sich gesondert zu verlegende und zu kontaktierende Leitungsverbindungen zwischen der die Bürstentragplatte 2 aufnehmenden ersten Ebene E1 und der die Leiterplatte 3 aufnehmenden zweiten Ebene E2 erübrigen.

## Patentansprüche

1. Entstörter Kommutatormotor, insbesondere drehzahlstellbarer Kraftfahrzeug-Servomotor,
- mit auf einer Bürstentragplatte (2) in einer ersten, im wesentlichen radial zur Motorachse verlaufenden, Ebene (E1) angeordneten Bürsten (4);
- mit auf einer Leiterplatte (3) in einer zweiten, im wesentlichen radial zu der Motorachse verlaufenden und axial zu der ersten Ebene (E1) beabstandeten, Ebene (E2) angeordneten, Stromversorgungs- bzw. Steuermitteln;
- mit einer direkten Kontaktverbindung zwischen den auf der Bürstentragplatte angeordneten Bürsten (4) und der Leiterplatte (3) mit den Stromversorgungs- bzw. Steuermitteln mittels für die Entstörung des Kommutatormotors vorgesehener Entstördrosseln (5);
- mit einer im wesentlichen axialen Anordnung der Entstördrosseln (5) zumindest über einen wesentlichen Teil ihrer Bauhöhe zwischen der ersten Ebene (E1) und der zweiten Ebene (E2).

2. Entstörter Kommutatormotor nach Anspruch 1
- mit einer Ausbildung der die Stromversorgungs- bzw. Steuermittel aufnehmenden Leiterplatte (3) als Stanzgitter-Leiterplatte.

3. Entstörter Kommutatormotor nach Anspruch 1 und/oder 2
- mit einer Fixierung der ersten Ebene (E1) und/oder der zweiten Ebene (E2), insbesondere der Bürstentragplatte (2) und/oder der Leiterplatte (3), in einem Motor-Lagerschild (1.1) des Kommutatormotors.

4. Entstörter Kommutatormotor nach zumindest einem der Ansprüche 1-3
- mit einer mechanischen Fixierung, insbesondere axialen Steckfixierung, der Entstördrosseln (5), in einer der beiden Ebenen (E1 bzw. E2).

5. Entstörter Kommutatormotor nach Anspruch 4
- mit einer mechanischen Steckfixierung des einen Endes der Entstördrosseln (5) in korrespondierenden Halterungen (3.2) in Form von Steckaufnahmen der zweiten Ebene (E2), insbesondere der Leiterplatte (3).

6. Entstörter Kommutatormotor nach Anspruch 4
- mit einer Löt-Kontaktierung, insbesondere einer Löt-Steckkontaktierung, des einen Anschlußendes der Entstördrosseln (5) mit der Leiterplatte (3) in der zweiten Ebene (E2).

7. Entstörter Kommutatormotor nach Anspruch 5 und/oder 6
- mit einer Durchführung des anderen Endes der Entstördrosseln (5) durch Öffnungen (2.1) in der ersten Ebene (E1), insbesondere der Bürstentragplatte (2).

8. Entstörter Kommutatormotor nach zumindest einem der Ansprüche 5-7
- mit einer unmittelbaren Kontaktierung der bürstenseitigen Anschlußenden (5.1) der Entstördrosseln (5) mit den Bürsten (4).

## Claims

1. Interference-suppressed commutator motor, in particular a variable speed motor vehicle servo motor,
- having brushes (4) disposed on a brush carrier plate (2) in a first plane (E1) running essentially radially with respect to the motor axis;
- having power supply or control means disposed on a circuit board (3) in a second plane (E2) running essentially radially with respect to the motor axis and axially distanced from the first plane (E1);
- having a direct contact connection between the brushes (4) disposed on the brush carrier plate and the circuit board (3) accommodating the power supply or control means by means of interference suppression chokes (5) for interference suppression of the commutator motor;
- having an essentially axial arrangement of the interference suppression chokes (5) at least over a considerable part of their overall height between the first plane (E1) and the second plane (E2).

2. Interference-suppressed commutator motor according to Claim 1,
- wherein the circuit board (3) accommodating the power supply or control means is implemented as a wire mesh.

3. Interference-suppressed commutator motor according to Claim 1 and/or 2,
- wherein the first plane (E1) and/or the second plane (E2), specifically the brush carrier plate (2) and/or the circuit board (3), are fixed in a motor end shield (1.1) of the commutator motor.

4. Interference-suppressed commutator motor according to at least one of Claims 1-3,
- wherein the interference suppression chokes (5) are mechanically fixed, particularly in an axial plug-in manner, in one of the two planes (E1 or E2).

5. Interference-suppressed commutator motor according to Claim 4,
- wherein one end of the interference suppression chokes (5) is mechanically fixed in a plug-in manner in corresponding supports (3.2) in the form of plug-in receptacles of the second plane (E2), particularly of the circuit board (3).

6. Interference-suppressed commutator motor according to Claim 4,
- wherein one lead end of the interference suppression chokes (5) is solder-contacted, in particular solder plug-in contacted with the circuit board (3) in the second plane (E2).

7. Interference-suppressed commutator motor according to Claim 5 and/or 6,
- wherein the other end of the interference suppression chokes (5) is fed through openings (2.1) in the first plane (E1), in particular of the brush carrier plate (2).

8. Interference-suppressed commutator motor according to at least one of Claims 5-7,
- wherein the brush-side lead ends (5.1) of the interference suppression chokes (5) are directly contacted with the brushes (4).

## Revendications

1. Moteur à collecteur antiparasité, en particulier servomoteur à vitesse de rotation réglable pour véhicule à moteur comportant
- des balais (4) placés sur une plaque porte-balais (2) dans un premier plan (E1) disposés essentiellement de manière radiale par rapport à l'axe du moteur;
- des moyens d'alimentation en courant et de commande placés sur une carte imprimée (3) dans un second plan (E2) disposés pour l'essentiel de manière radiale par rapport à l'axe du moteur et écartés axialement par rapport au premier plan (E1);
- une connexion directe entre les balais (4) placés sur la plaque porte-balais et la carte imprimée (3) avec les moyens d'alimentation en courant et de commande au moyen de bobines d'antiparasitage (5) prévues pour l'antiparasitage du moteur à collecteur;
- une disposition essentiellement axiale des bobines d'antiparasitage (5) au moins sur une partie essentielle de leur hauteur de construction entre le premier plan (E1) et le second plan (E2).

2. Moteur à collecteur antiparasité selon la revendication 1, dans lequel
- la carte imprimée (3) recevant les moyens d'alimentation en courant et de commande est réalisée sous forme de carte imprimée à grillage estampé.

3. Moteur à collecteur antiparasité selon la revendication 1 et/ou la revendication 2, comportant
- une fixation du premier plan (E1) et/ou du second plan (E2), en particulier de la plaque porte-balais (2) et/ou de la carte imprimée, dans un flasque de moteur 1.1 du moteur à collecteur.

4. Moteur à collecteur antiparasité selon l'une au moins des revendications 1 à 3, comportant
- une fixation mécanique, en particulier une fixation axiale par enfichage, des bobines d'antiparasitage (5), dans l'un des deux plans (E1 et E2).

5. Moteur à collecteur antiparasité selon la revendication 4, comportant
- une fixation par enfichage mécanique de l'une des extrémités de raccordement des bobines d'antiparasitage (5) dans des supports correspondants (3.2) ayant la forme de logements d'enfichage du second plan (E2), en particulier de la carte imprimée (3).

6. Moteur à collecteur antiparasité selon la revendication 4, comportant
- une mise en contact par brasage, en particulier une mise en contact d'enfichage à braser de l'une des extrémités de raccordement des bobines d'antiparasitage (5) avec la carte imprimée (3) dans le second plan (E2).

7. Moteur à collecteur antiparasité selon la revendication 4 et/ou la revendication 6, comportant
- un passage de l'autre extrémité des bobines d'antiparasitage (5) par des ouvertures (2.1) dans le premier plan (E1), en particulier la plaque porte-balais (2).

8. Moteur à collecteur antiparasité selon au moins l'une des revendications 5 à 7, comportant
- une mise en contact directe des extrémités de raccordement (5.1) côté balais des bobines d'antiparasitage (5) avec les balais (4).
